# FASCICULE DE BREVET EUROPEEN

(11) **EP 3 449 755 B1**
(45) Date de publication et mention de la délivrance du brevet: **29.04.2020**
(21) Numéro de dépôt: 18190995.3
(22) Date de dépôt: 27.08.2018
(51) Int. Cl.: A44C 5/10, A44C 27/00, B29C 64/00, B33Y 80/00

(54) **BRACELET ARTICULE**
ARMBAND MIT GELENKGLIEDERN
HINGED BRACELET

(30) Priorité: 01.09.2017 CH 10872017
(43) Date de publication de la demande: 06.03.2019
(73) Titulaire: Richemont International S.A., 1752 Villars-sur-Glâne (CH)
(72) Inventeur: CRETIN, Francis, 39220 Bois-d'Amont (FR)
(74) Mandataire: e-Patent SA

(56) Documents cités:
- BE-A- 830 919
- CN-A- 105 726 035
- FR-A1- 3 002 726
- US-A- 1 440 230

## Description

### Domaine technique

La présente invention se rapporte au domaine de l'horlogerie. Elle concerne, plus particulièrement, le domaine des bracelets du type à maillons.

Selon la terminologie courante, les bracelets utilisés dans l'horlogerie sont dits souples, lorsqu'ils sont formés par une bande continue de cuir, de textile, de caoutchouc ou autres plastiques. On parle de bracelets à maillons lorsqu'ils mettent en œuvre des plots, rigides, assemblés les uns aux autres par des systèmes d'articulation, de type charnière.

### Etat de la technique

Le document FR814273A décrit un bracelet ou autre bijou et plus particulièrement un bracelet en forme d'anneau fendu, dont la caractéristique principale consiste en ce qu'il se compose de plusieurs éléments, de type maillons, articulés entre eux et munis de ressorts de rappel. Ces ressorts sont agencés de manière à ce que, lorsqu'on a besoin d'écarter les deux bords extrêmes du bracelet pour le mettre ou l'enlever, les ressorts se déforment avec un faible déplacement angulaire entre deux éléments consécutifs.

Il est en outre mentionné que les ressorts à lame pourraient être remplacés par des ressorts à boudins, ou encore des ressorts de torsion constitués par exemple par les axes d'articulation eux-mêmes, qui seraient alors solidarisés en un point, de l'un des éléments, et en un autre point, de l'élément voisin.

Le bracelet tel que décrit dans le document FR814273A dispose d'un grand nombre d'éléments et de pièces. De fait, il présente ainsi les contraintes bien connues de l'homme du métier au niveau de la complexité de montage et d'assemblage des différentes pièces ainsi que de l'usure des articulations dans le temps.

Le brevet BE830919 décrit une construction de bracelet de montre à maillons simplifiée par rapport à celle qui vient d'être décrite dans la mesure où deux maillons adjacents coopèrent l'un avec l'autre par l'intermédiaire de deux languettes incurvées en forme de spirales, dont chacune est réalisée d'une pièce avec l'un des maillons, les deux languettes s'imbriquant l'une dans l'autre par déformation élastique.

Le brevet US1440230 décrit une construction asymétrique basée sur un principe similaire à celui du brevet BE830919.

Avec les constructions qui viennent d'être présentées, l'adaptation du bracelet aux dimensions du poignet de l'utilisateur peut être réalisée par ajout ou retrait d'un ou plusieurs maillons. Ce principe d'adaptation ne permet pas un réglage fin des dimensions du bracelet. L'écart de longueur minimum entre deux configurations de réglage, étant déterminé par la dimension d'un maillon.

De plus, les deux dernières constructions, simplifiées en référence à la première mentionnée plus haut du point de vue du nombre de composants et donc de l'assemblage, présentent des apparences bien particulières, en rupture avec l'apparence habituelle des bracelets de montres à maillons, ce qui limite la possibilité de les utiliser à grande échelle ou pour tous types de montres.

Le document CN105726035 divulgue un bracelet fait par impression 3D dans le domaine médical.

L'invention a pour but de proposer une construction d'élément de bracelet et un bracelet comprenant au moins un tel élément, exempts des inconvénients de l'art antérieur.

### Divulguation de l'invention

De façon plus précise, l'invention concerne un élément de bracelet à maillons, comprenant au moins des premier et deuxième maillons reliés entre eux et dont chacun présente une portion de base rigide, les portions de base rigides étant reliées l'une à l'autre par l'intermédiaire d'une portion de liaison souple. Cet élément de bracelet est caractérisé par le fait que les portions de base rigides et la portion de liaison souple définissent ensemble une pièce monobloc venue de matière.

De manière préférée, la portion de liaison souple est agencée pour définir une articulation flexible entre les premier et deuxième maillons.

Selon un mode de réalisation préféré, on peut prévoir que l'élément de bracelet comporte au moins un troisième maillon, présentant une portion de base rigide, relié au premier maillon par l'intermédiaire de la portion de liaison souple et/ou d'une portion de liaison souple supplémentaire, la portion de base rigide du troisième maillon et, le cas échéant, la portion de liaison souple supplémentaire faisant également partie de la pièce monobloc venue de matière.

Suivant une variante de réalisation préférée, les premier, deuxième et troisième maillons sont agencés de telle manière que les deuxième et troisième maillons soient situés de part et d'autre du premier maillon, en étant décalés par rapport à lui et en étant en vis-à-vis l'un de l'autre.

L'invention concerne également un bracelet comprenant une pluralité d'éléments de bracelet, tels que définis ci-dessus, dont les premiers maillons forment une rangée centrale, les deuxièmes maillons formant une première rangée latérale et les troisièmes maillons formant une deuxième rangée latérale, deux maillons en vis-à-vis, respectivement situés dans la première et la deuxième rangées latérales étant reliés par un barreau définissant un axe en référence auquel un maillon de la rangée centrale est mobile, le maillon de la rangée centrale étant relié élastiquement par sa portion de liaison souple au barreau et formant un ensemble monobloc avec le barreau et les deux maillons des rangées latérales.

De manière préférée, dans ce cas, la portion souple comporte une bande en spirale enroulée autour du barreau.

D'autres caractéristiques avantageuses sont mentionnées dans les revendications.

Dans la présente invention, un bracelet à maillons est défini selon l'usage habituel du domaine et de l'homme du métier, c'est-à-dire qu'il s'agit d'un bracelet ayant un aspect similaire à un bracelet à maillons usuel, formé par des plots, même si, dans le cas de la présente invention, les plots d'une pièce monobloc ne sont pas séparables physiquement sans rupture destructive.

Le terme monobloc, a été complété par l'expression « venu de matière » pour éviter tout risque lié à un défaut de clarté ou d'interprétation. En effet, au sens de la présente demande, monobloc ne signifie pas seulement un ensemble rigide, mais également une continuité de phase et de matière, comme typiquement obtenu par un procédé additif de réalisation de la pièce monobloc.

L'invention concerne également un procédé de réalisation d'un élément de bracelet ou d'un bracelet tels que définis ci-dessus, ce procédé comportant en particulier une étape de réalisation de la pièce monobloc par impression 3D ou par un procédé de fabrication additive.

Plus particulièrement, le procédé peut comprendre les étapes suivantes:
- paramétrisation / dimensionnement de la pièce monobloc, sur la base d'informations liées aux dimensions et/ou à la géométrie du poignet d'un porteur,
- réalisation de la pièce monobloc par impression 3D ou par le procédé de fabrication additive.

Grâce à ces caractéristiques, le fabricant de bracelets dispose d'une grande flexibilité dans le choix du design.

De plus, un tel procédé permet de faire varier légèrement les dimensions, en particulier la longueur, des maillons constitutifs du bracelet autour d'une valeur de référence, en fonction des informations liées aux dimensions et/ou à la géométrie du poignet d'un porteur, dans le but d'ajuster la longueur totale du bracelet pour qu'il soit réalisé sur mesure pour un porteur donné. Ainsi, on peut avantageusement définir un nombre de maillons, présentant une longueur correspondant à la valeur de référence, définissant une longueur totale du bracelet la plus proche de la longueur à atteindre pour un porteur donné, inférieure ou supérieure, avant d'ajuster la longueur de chaque maillon, soit en l'allongeant soit en le raccourcissant par rapport à la valeur de référence, lors de la première étape du procédé ci-dessus, pour affiner la longueur totale du bracelet.

En outre, la fabrication additive sur mesure permet aussi de créer un bracelet flexible dont la forme au repos est adaptée à la forme/courbure du poignet du porteur (poignet plutôt rond, ovale, plat...).

Le bracelet selon l'invention peut également être associé à un dispositif additionnel de réglage fin de la longueur, notamment un fermoir.

D'autres caractéristiques avantageuses du procédé sont mentionnées dans les revendications.

### Brève description des dessins

D'autres détails de l'invention apparaîtront plus clairement à la lecture de la description qui suit, faite en référence au dessin annexé dans lequel :
- la figure 1 représente une vue en perspective d'un bracelet comprenant notamment un élément selon l'invention,

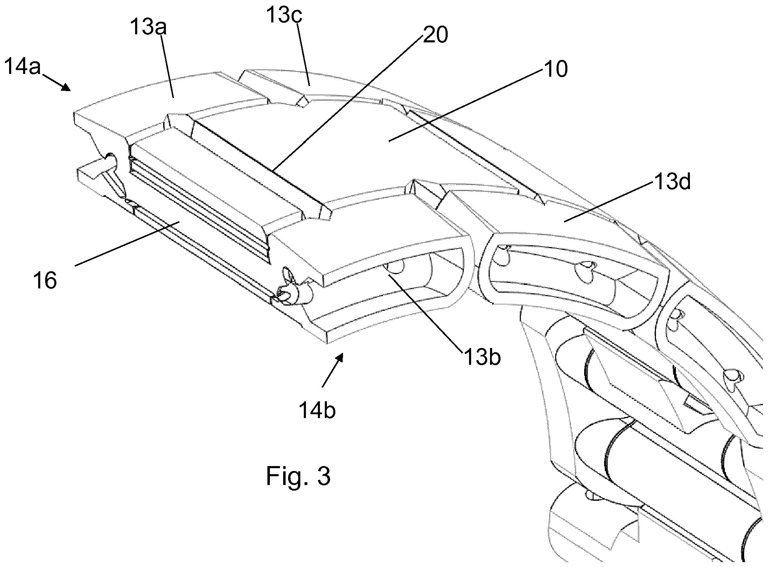

- les figures 2, 3 et 4 proposent différents coupes, respectivement longitudinale selon l'axe du bracelet, transversale et une combinaison de ces deux coupes, et
- les figures 5 et 6 montrent des détails du procédé de fabrication selon un autre aspect de l'invention.

### Mode de réalisation de l'invention

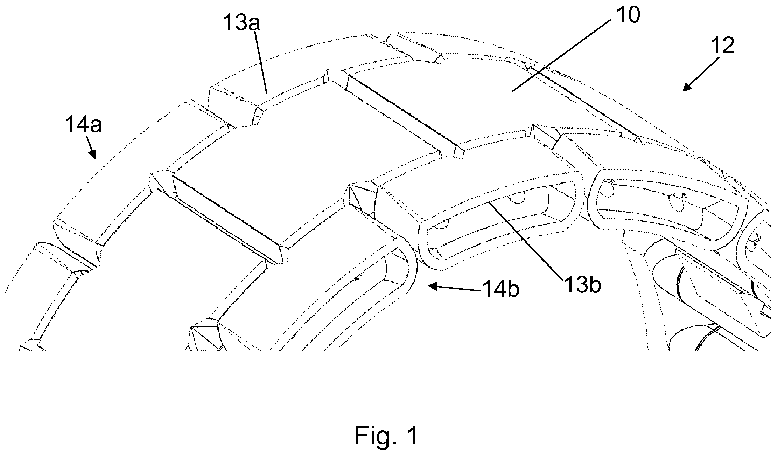

On a représenté sur la figure 1, un bracelet susceptible d'être utilisé en combinaison avec une montre ou en tant que tel, comme bijou. Les éventuels éléments de liaison ou d'attache à une boîte, ou des éléments de fermeture, de type fermoir ou boucle, ne faisant pas partie de l'invention, ils ne seront pas décrits dans la présente demande. L'homme du métier aura la capacité de les intégrer au bracelet et éléments de bracelet selon l'invention, de manière directe.

Le bracelet concerné par la présente demande, est un bracelet de type à maillons, tel que défini ci-dessus. En effet, sur la figure 1, le bracelet représenté est tout à fait similaire, esthétiquement, à un bracelet à maillons de type conventionnel, formé de plots 10. Dans l'exemple proposé, le bracelet comporte une rangée centrale 12, avec de part et d'autre, des rangées latérales 14a et 14b, les plots des rangées latérales 14a et 14b étant en vis-à-vis par paires, décalées environ d'un demi plot, par rapport aux plots 10 de la rangée centrale 12.

Selon un premier aspect de l'invention, le bracelet comporte avantageusement au moins un élément comprenant une portion de base rigide et au moins une portion de liaison souple. La portion de base rigide de l'élément correspond au plot d'un maillon traditionnel. Comme on le comprendra par la suite, la portion de liaison souple est destinée à participer à, ou à constituer une articulation avec des maillons voisins.

Selon l'invention, la portion rigide et la portion souple définissent ensemble une pièce monobloc venue de matière, qui peut avantageusement être obtenue par une méthode de fabrication additive, de type impression 3D.

De manière avantageuse, l'invention concerne également un bracelet comprenant une pluralité de maillons, et au moins un élément de bracelet tel que défini ci-dessus. L'élément de bracelet selon l'invention est relié par sa portion de liaison souple à un maillon adjacent, ledit élément de bracelet et ledit maillon adjacent définissant ensemble une pièce monobloc venue de matière. Cette portion souple définit une articulation flexible entre l'élément de bracelet et le maillon adjacent.

Le maillon adjacent peut être un maillon standard, comprenant des moyens de liaison avec la portion de liaison souple, par surmoulage par exemple, ou par une connexion mécanique.

De manière avantageuse et comme représenté sur les figures, le maillon adjacent peut également faire partie d'un élément de bracelet selon l'invention, comprenant également une portion de base rigide et une portion de liaison souple, formant une pièce monobloc d'une première part, également monobloc avec l'élément de bracelet adjacent. En d'autres termes, selon les configurations, il peut être théorique de définir si la portion de liaison souple est à rattacher à l'une ou l'autre portions de base rigides. On retiendra qu'on a deux portions rigides reliées par une portion souple, qui peut être considérée comme partagée en deux zones respectivement liées à l'une et l'autre des portions rigides, l'ensemble formant une pièce monobloc.

Dans le sens de la présente demande, le terme « adjacent » implique des éléments ou maillons voisins situés dans des rangées distinctes, tandis qu'on désignera par le terme « consécutif » des maillons voisins situés dans une même rangée.

Ainsi, la présente invention concerne des éléments ou un ensemble d'éléments, destinés à former un bracelet de type à maillons, dans lequel la portion de base rigide et au moins une partie de l'articulation à un maillon voisin, est venu d'une pièce. Par extension, on peut réaliser de manière monobloc un ensemble d'éléments, formant une partie de bracelet, ou un brin de bracelet ou tout un bracelet. L'homme du métier pourra envisager divers types de designs sur cette base, que ce soit sur la forme des portions rigides ou sur les agencements de rangées.

Nous allons maintenant décrire en détails un mode de réalisation préféré, représenté sur les figures.

Ainsi, sur ces figures, on a représenté un bracelet comprenant une pluralité d'éléments de bracelet tels que définis ci-dessus. Ces éléments de bracelets, comprenant chacun une portion de base rigide et d'une portion de liaison souple, composent notamment une rangée centrale 12. De part et d'autre de cette rangée centrale 12, des premiers maillons 13a forment une première rangée latérale 14a et des deuxièmes maillons 13b forment une deuxième rangée latérale 14b. Les premiers maillons 13a et les deuxièmes maillons 13b sont respectivement situés en vis-à-vis, deux à deux, formant une paire.

Les maillons latéraux d'une même paire sont reliés par un barreau 16 définissant un axe en référence auquel un maillon de la rangée centrale 12 est mobile. Ce maillon de la rangée centrale 12 est relié élastiquement par sa partie souple au barreau 16. L'ensemble ainsi formé par la paire de maillons latéraux 13a, 13b, par le barreau 16 et par l'élément de la rangée centrale 12, est monobloc.

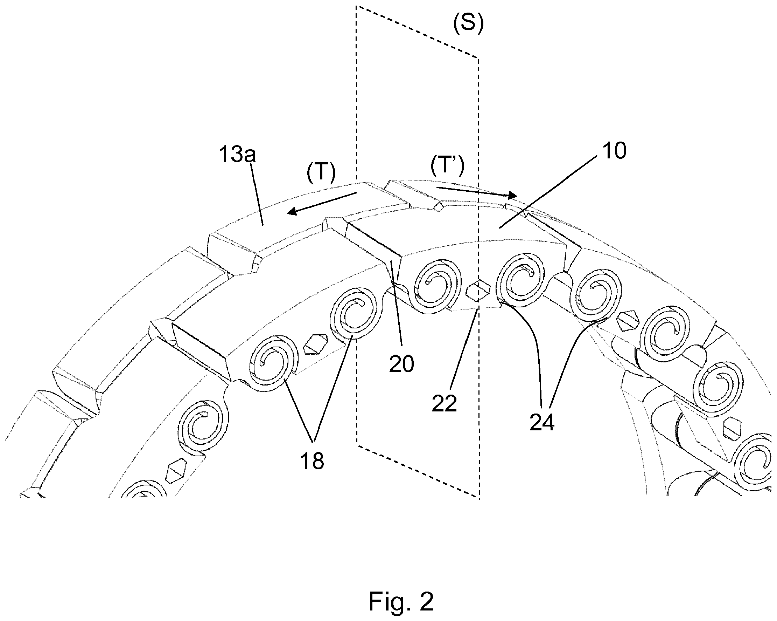

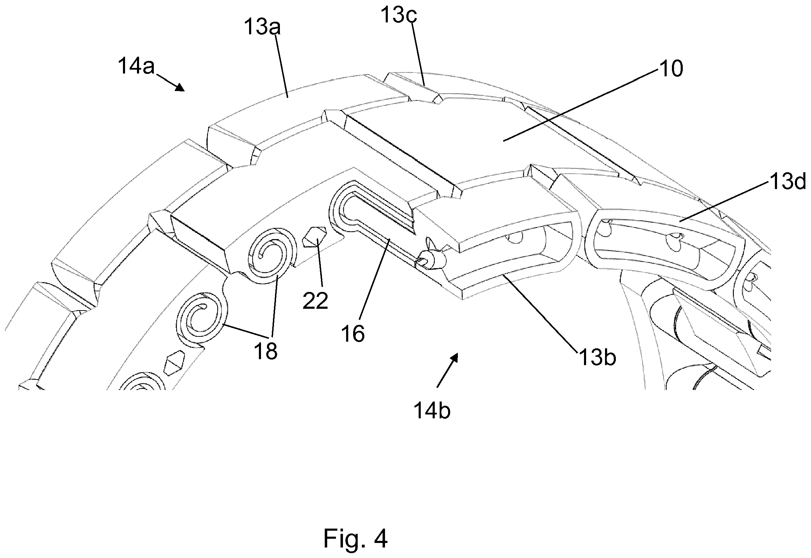

Comme on peut particulièrement le voir sur les figures 2 et 4, la portion de liaison souple du maillon 10 de la rangée centrale 12, est une bande en spirale 18 enroulée autour du barreau 16, et donc venue de matière avec le barreau 16.

Si on peut assembler par des moyens conventionnels, de type barrette, des ensembles formés par un maillon de la rangée centrale 12 et une paire de maillons latéraux 13a, 13b, un mode réalisation préféré propose d'étendre la construction monobloc.

Pour ce faire, comme sur les figures, deux maillons de bracelet consécutifs de la rangée centrale 12 sont reliés entre eux par une paire formée d'un premier maillon 13a et d'un deuxième maillon 13b de chaque rangée latérale 14a et 14b, respectivement. Plus précisément, comme mentionné ci-dessus, les premier 13a et deuxième maillons 13b d'une paire sont reliés par un premier et un deuxième barreaux 16. Chacun de ces barreaux 16 est relié à un des maillons consécutifs de la rangée centrale 12, par une bande en spirale 18.

Ainsi, si l'on définit un plan de symétrie (S) passant par le milieu d'un maillon de bracelet de la rangée centrale 12, ce plan étant perpendiculaire à l'axe longitudinal du bracelet, on a donc deux bandes en spirale 18, reliées respectivement à une première paire de maillons latéraux 13a, 13b, et à une deuxième paire consécutive 13c, 13d, de maillons latéraux. Ces deux bandes en spirale 18 sont enroulées symétriquement.

De la sorte, lorsque le bracelet est enroulé ou déroulé, les bandes en spirale 18 s'enroulent ou se déroulent. Dans la configuration proposée sur les figures, les bandes en spirale 18 s'enroulent lorsque le bracelet est resserré, c'est-à-dire lorsque le rayon de courbure formé par le bracelet diminue, comme pour l'adapter sur un poignet plus petit. Dans leur enroulement, les bandes en spirale 18 définissent une butée lorsque les spires sont au contact l'une de l'autre et en appui sur leur barreau 16 respectif, définissant ainsi des moyens de butée, agencés pour limiter un déplacement relatif des maillons de la rangée latérale 14a, 14b par rapport audit maillon de bracelet de la rangée centrale 12, en l'espèce dans le sens de l'enroulement du bracelet.

Les bandes en spirale 18 définissent également une butée limitant des déplacements résultant d'une force de traction (T sur la figure 2), dans l'axe longitudinal du bracelet. En exerçant une telle force sur un maillon, le centre des bandes en spirale subit une translation dans la direction de la force de traction, déformant les bandes en spirale qui viennent en butée sur les parties externes rigides jouxtant les bandes en spirale 18.

Par ailleurs, les bords 20 des maillons de la rangée centrale 12 disposés perpendiculairement à l'axe principal du bracelet, sont ajustés avec jeu, afin de permettre un déplacement relatif entre les maillons de la rangée centrale 12.

Toutefois, les maillons de bracelet consécutifs de la rangée centrale 12, notamment les bords 20, sont conformés de manière à définir des moyens de butés, agencés pour limiter un déplacement relatif desdits maillons adjacents, en l'espèce dans le sens du déroulement du bracelet. Un tel déplacement provoque un déroulement de la spirale, c'est-à-dire, en référence au dessin, un déplacement tendant à ouvrir le bracelet ou à agrandir sa dimension par rapport au poignet d'un porteur.

Structurellement, la face inférieure du maillon central définit un pied 22, destiné à être au contact de la peau du porteur du bracelet. Ce pied 22 définit des parois concaves 24 servant de logement, au moins partiel, aux bandes en spirale 18 des portions souples. Le pied 22 est destiné à former un appui sur le bras du porteur.

Sur la base de l'enseignement proposé ci-dessus, on pourra réaliser un brin, avantageusement deux brins de bracelet, réalisé en une seule pièce monobloc, venue de matière. Chaque brin comprend à une extrémité, des moyens d'attache à une boîte de montre et à une autre extrémité, des moyens d'attache à un fermoir. A titre de simple exemple, on pourra laisser apparent un barreau 16 reliant les maillons d'une paire. Le fermoir ou la boîte peuvent alors être dotés de languettes mobiles, susceptibles de coopérer avec les barreaux 16, pour les enserrer et en être rendues solidaires.

On pourrait également prévoir de réaliser un bracelet de montre en un seul brin, comprenant à ses extrémités des moyens d'attache à une boîte de montre, dont au moins l'une de ses extrémités dispose d'une attache amovible sans outils à la boite de montre, permettant un verrouillage du bracelet, l'autre attache permettant une rotation relative entre l'extrémité du bracelet et la boîte de montre, afin d'autoriser une ouverture libérant le poignet.

Selon un autre aspect important, l'invention concerne un procédé de réalisation d'un bracelet ou d'un élément de bracelet tels que proposés ci-dessus, dans lequel la pièce monobloc est réalisée par impression 3D ou par un procédé de fabrication additive.

Les contraintes technologiques du procédé de fabrication sont prises en compte dans le design des différents éléments, notamment par rapport aux angles et déports qu'il est possible de réaliser avec les techniques disponibles.

Un avantage principal de l'utilisation de techniques de fabrication additive, est de permettre une grande adaptation, voire une fabrication sur mesure, en usine ou sur mesure même en boutique.

Ainsi, de manière avantageuse, le procédé peut comprendre les étapes suivantes :
- mesure du périmètre du poignet et/ou de la courbure du poignet,
- paramétrisation/dimensionnement de la pièce monobloc, en fonction des résultats de l'étape de mesure,
- réalisation de la pièce monobloc en fonction des dimensions déterminées lors de l'étape de dimensionnement.

L'étape de paramétrisation/dimensionnement consiste à définir les dimensions de la pièce monobloc, en tenant compte de la géométrie du bracelet et des dimensions du poignet mesurées. La pièce monobloc concernée ici peut être un élément de bracelet ou plusieurs éléments ou le bracelet entier, sauf les éléments d'attache qui devraient, le cas échéant, être ajoutés.

Ainsi, on aura bien compris que le bracelet peut être réalisé directement par une technique de fabrication additive. Selon le matériau choisi et le niveau de finition que l'on souhaite obtenir, on pourra réaliser une étape de traitement de surface, dite étape de finition, qui peut consister en un polissage, un anglage, un satinage, ou une combinaison de ces opérations.

De manière avantageuse, l'étape de fabrication additive peut être réalisée de manière à ce que la pièce monobloc soit obtenue dans un état rigide, c'est-à-dire sans mobilité entre les différents éléments, ce qui permet de faciliter les opérations de finition.

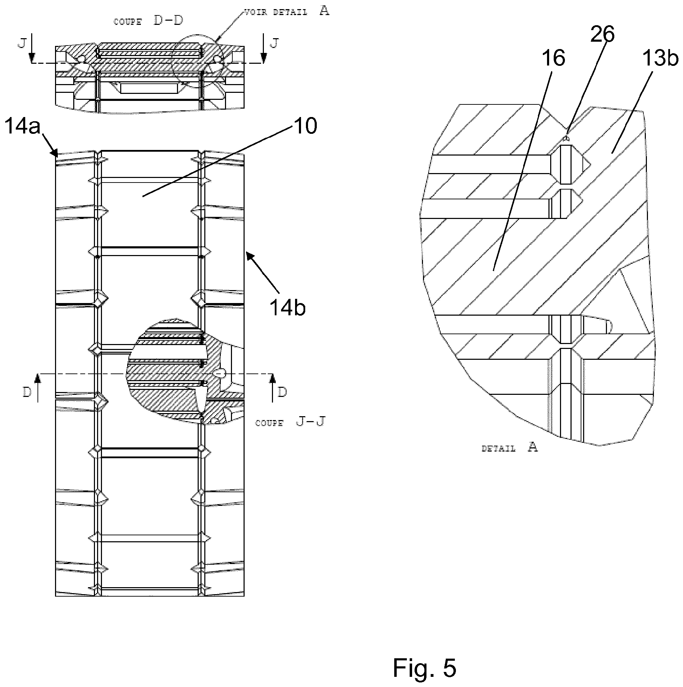

Pour ce faire, le procédé de réalisation tel que proposé, peut avantageusement comprendre les étapes suivantes :
- obtention de ladite pièce monobloc par ladite étape d'impression 3D ou de fabrication additive, ladite pièce monobloc comportant au moins deux portions rigides reliées entre elles, d'une part par une portion de liaison souple et, d'autre part, par un élément de liaison rigide 26 (fig. 5) empêchant tout déplacement relatif entre les portions rigides,
- finition de la surface de ladite pièce monobloc rigide,
- suppression de l'élément de liaison rigide 26 (fig. 7) pour conférer au moins un degré de liberté entre les portions rigides dudit bracelet.

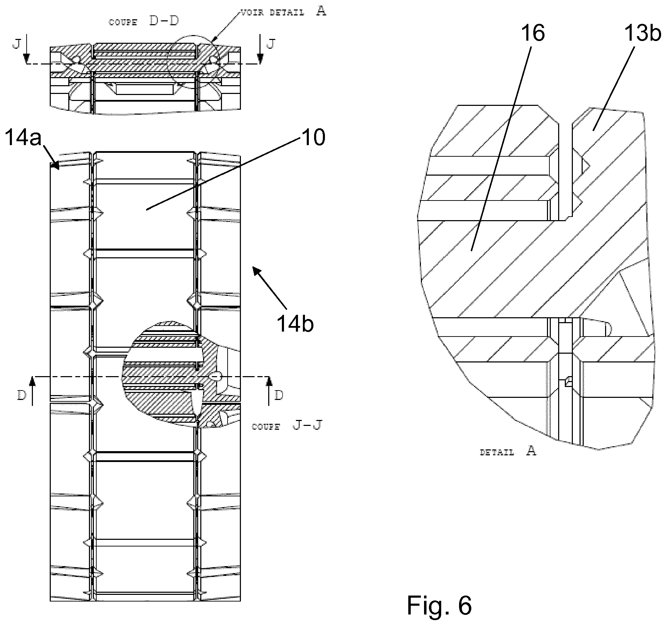

Par exemple, on pourra imprimer une zone de continuité entre les maillons de la rangée centrale 12 et les maillons des rangées latérales 14a, 14b, pour obtenir l'élément de liaison rigide 26. Cette zone de continuité peut être ablatée, par découpage, ou usinage, afin de libérer les parties souples et conférer de la mobilité entre les éléments de la rangée centrale 12 et les maillons des rangées latérales 14a, 14b, respectivement (fig. 6).

Le procédé de réalisation de ce bracelet peut en outre être adapté pour que le bracelet soit fabriqué/imprimé, avec une préforme, notamment pour éventuellement tenir compte des amplitudes de déplacement relatif entre les maillons. En effet, on peut envisager des modes de réalisation dans lesquels le bracelet pourrait ne pas pouvoir être mis à plat, ou dans lesquels l'écart entre ses positions « déroulées » et « enroulées » maximal, est limité. On pourra alors choisir de réaliser au moins certains des maillons consécutifs, qui définissent chacun un plan principal, de manière que ces maillons consécutifs définissent entre leurs plans principaux respectifs, et du côté destiné à être au contact du bras du porteur, un angle inférieur à 180°.

Ainsi est proposé un bracelet de type à maillon, réalisé partiellement ou entièrement, de manière monobloc, de préférence par des techniques de fabrication additive. On a décrit un type de bracelet particulier et avantageusement adapté, mais l'homme du métier pourra envisager d'autres types de constructions, d'autres formes de maillons, sur la base de la présente description. Ainsi, à titre d'exemple, on pourrait envisager d'avoir une unique rangée de maillons, suivant la direction longitudinale du bracelet, dont chacun présenterait la forme de l'ensemble comprenant un maillon central et une paire de maillons latéraux. Dans ce cas, chaque maillon central pourrait comporter une portion de liaison souple en forme de spirale enroulée autour d'un barreau solidaire des portions latérales du maillon voisin. De manière générale, un grand nombre de variantes sont possibles. Notamment, en relation avec le mode de réalisation préféré tel que décrit et illustré, on pourrait prévoir que chaque maillon latéral est rendu solidaire du barreau par l'intermédiaire d'une portion de liaison souple additionnelle, par exemple en forme de spirale. En alternative, on pourrait prévoir que deux plots solidaires du maillon central remplissent la fonction du barreau 16, un maillon latéral étant rendu solidaire de chaque plot par l'intermédiaire d'une portion de liaison souple.

En termes de matériaux, les possibilités offertes par les différentes techniques de fabrication additive permettent de réaliser des bracelets en plastique ou métalliques, dans le dernier cas, la possibilité de réaliser les étapes de finition comme mentionné plus haut, est particulièrement avantageuse.

## Revendications

1. Elément de bracelet à maillons, comprenant au moins des premier et deuxième maillons (10, 13a, 13b) reliés entre eux et dont chacun présente une portion de base rigide, lesdites portions de base rigides étant reliées l'une à l'autre par l'intermédiaire d'au moins une portion de liaison souple (18), **caractérisé en ce que** lesdites portions de base rigides et ladite portion de liaison souple définissent ensemble une pièce monobloc venue de matière.

2. Elément de bracelet selon la revendication 1, **caractérisé en ce que** ladite portion de liaison souple est agencée pour définir une articulation flexible entre lesdits premier et deuxième maillons.

3. Elément de bracelet selon la revendication 1 ou 2, **caractérisé en ce qu'**il comporte au moins un troisième maillon, présentant une portion de base rigide, relié audit premier maillon par l'intermédiaire de ladite portion de liaison souple et/ou d'une portion de liaison souple supplémentaire, ladite portion de base rigide dudit troisième maillon et, le cas échéant, ladite portion de liaison souple supplémentaire faisant également partie de ladite pièce monobloc venue de matière.

4. Elément de bracelet selon la revendication 3, **caractérisé en ce que** lesdits premier, deuxième et troisième maillons sont agencés de telle manière que lesdits deuxième et troisième maillons soient situés de part et d'autre dudit premier maillon, en étant décalés par rapport à lui et en étant en vis-à-vis l'un de l'autre.

5. Bracelet comportant une pluralité d'éléments de bracelet selon l'une des revendications 3 ou 4, dont lesdits premiers maillons forment une rangée centrale (12), lesdits deuxièmes maillons formant une première rangée latérale (14a) et lesdits troisièmes maillons formant une deuxième rangée latérale (14b), **caractérisé en ce que** deux maillons (13a, 13b) en vis-à-vis, respectivement situés dans la première et la deuxième rangées latérales (14a, 14b), sont reliés par un barreau (16) définissant un axe en référence auquel un maillon de la rangée centrale (12) est mobile, ledit maillon de la rangée centrale étant relié élastiquement par sa portion de liaison souple audit barreau (16) et formant un ensemble monobloc avec ledit barreau (16) et lesdits deux maillons des rangées latérales (14a, 14b).

6. Bracelet selon la revendication 5, **caractérisé en ce que** ladite portion souple comporte une bande en spirale (18) enroulée autour dudit barreau (16).

7. Bracelet selon la revendication 6, **caractérisé en ce que** les maillons de la rangée centrale (12) d'au moins deux éléments de bracelet consécutifs sont reliés entre eux par un premier maillon (13a) et un deuxième maillon (13b) de chaque rangée latérale (14a, 14b) situés en vis-à-vis l'un de l'autre, lesdits maillons de la rangée centrale (12) étant conformés de manière à définir des moyens de butée, agencés pour limiter le déplacement relatif entre lesdits éléments de bracelet consécutifs, ledit déplacement relatif provoquant une déformation de la bande en spirale (18).

8. Bracelet selon l'une des revendications 5 ou 6, **caractérisé en ce qu'**au moins l'un desdits maillons de la rangée centrale (12) est conformé de manière à définir des moyens de butée, agencés pour limiter un déplacement relatif des maillons adjacents de la première et de la deuxième rangées latérales (14a, 14b) par rapport audit maillon de la rangée centrale (12), ledit déplacement relatif provoquant une déformation de la bande en spirale (18).

9. Bracelet selon l'une des revendications 5 à 8, comprenant deux brins, chaque brin comprenant à une extrémité, des moyens d'attache à une boîte de montre et à une autre extrémité, des moyens d'attache à un fermoir.

10. Bracelet selon l'une des revendications 5 à 8, comprenant un seul brin, ledit brin comprenant à ses extrémités des moyens d'attache à une boîte de montre et dont au moins l'une de ses extrémités dispose d'une attache amovible sans outil à la boite de montre.

11. Procédé de réalisation d'un élément de bracelet selon l'une des revendications 1 à 4 ou d'un bracelet selon l'une des revendications 5 à 10, **caractérisé en ce qu'**il comporte une étape de réalisation de la pièce monobloc par impression 3D ou par un procédé de fabrication additive.

12. Procédé de réalisation selon la revendication 11, **caractérisé en ce qu'**il comprend les étapes suivantes :
- paramétrisation / dimensionnement de la pièce monobloc, sur la base d'informations liées aux dimensions et/ou à la géométrie du poignet d'un porteur,
- réalisation de la pièce monobloc par impression 3D ou par le procédé de fabrication additive.

13. Procédé de réalisation d'un bracelet selon l'une des revendications 11 ou 12, comprenant les étapes suivantes :
- obtention de ladite pièce monobloc par ladite étape d'impression 3D ou de fabrication additive, ladite pièce monobloc comportant au moins deux portions rigides reliées entre elles, d'une part, par une portion de liaison souple et, d'autre part, par un élément de liaison rigide empêchant tout déplacement relatif entre lesdites portions rigides,
- finition de la surface de ladite pièce monobloc,
- suppression de l'élément de liaison rigide pour conférer au moins un degré de liberté entre lesdites portions rigides dudit bracelet.

14. Procédé de réalisation selon l'une des revendications 11 à 13, dans lequel chaque maillon définit un plan principal, **caractérisé en ce qu'**au moins certains des maillons consécutifs définissent entre leurs plans principaux respectifs, et du côté destiné à être au contact du bras du porteur, un angle inférieur à 180°.

## Patentansprüche

1. Gliederarmbandelement, welches wenigstens ein erstes und ein zweites Glied (10, 13a, 13b) umfasst, die untereinander verbunden sind und von denen jedes einen starren Basisabschnitt aufweist, wobei die starren Basisabschnitte durch wenigstens einen flexiblen Verbindungsabschnitt (18) miteinander verbunden sind,
**dadurch gekennzeichnet, dass** die starren Basisabschnitte und der flexible Verbindungsabschnitt zusammen ein einstückig ausgebildetes Teil definieren.

2. Armbandelement nach Anspruch 1, **dadurch gekennzeichnet, dass** der flexible Verbindungsabschnitt dafür ausgebildet ist, ein flexibles Gelenk zwischen dem ersten und dem zweiten Glied zu bilden.

3. Armbandelement nach Anspruch 1 oder 2, **dadurch gekennzeichnet, dass** es wenigstens ein drittes Glied umfasst, das einen starren Basisabschnitt aufweist, der mit dem ersten Glied durch den flexiblen Verbindungsabschnitt und/oder einen zusätzlichen flexiblen Verbindungsabschnitt verbunden ist, wobei der starre Basisabschnitt des dritten Gliedes und gegebenenfalls der zusätzliche flexible Verbindungsabschnitt ebenfalls Teil des einstückig ausgebildeten Teils sind.

4. Armbandelement nach Anspruch 3, **dadurch gekennzeichnet, dass** das erste, zweite und dritte Glied derart angeordnet sind, dass sich das zweite und dritte Glied beiderseits des ersten Gliedes befinden, wobei sie in Bezug auf dieses versetzt sind und wobei sie einander gegenüberliegen.

5. Armband, welches mehrere Armbandelemente nach einem der Ansprüche 3 oder 4 aufweist, von denen die ersten Glieder eine mittlere Reihe (12) bilden, die zweiten Glieder eine erste seitliche Reihe (14a) bilden und die dritten Glieder eine zweite seitliche Reihe (14b) bilden, **dadurch gekennzeichnet, dass** zwei einander gegenüberliegende Glieder (13a, 13b), die sich in der ersten bzw. zweiten seitlichen Reihe (14a, 14b) befinden, durch einen Stab (16) verbunden sind, der eine Achse definiert, in Bezug auf die ein Glied der mittleren Reihe (12) beweglich ist, wobei das Glied der mittleren Reihe über seinen flexiblen Verbindungsabschnitt elastisch mit dem Stab (16) verbunden ist und mit dem Stab (16) und den beiden Gliedern der seitlichen Reihen (14a, 14b) eine einstückige Einheit bildet.

6. Armband nach Anspruch 5, **dadurch gekennzeichnet, dass** der flexible Abschnitt ein spiralförmiges Band (18) umfasst, das um den Stab (16) herumgewickelt ist.

7. Armband nach Anspruch 6, **dadurch gekennzeichnet, dass** die Glieder der mittleren Reihe (12) von wenigstens zwei aufeinander folgenden Armbandelementen durch ein erstes Glied (13a) und ein zweites Glied (13b) der jeweiligen seitlichen Reihe (14a, 14b), die einander gegenüberliegen, miteinander verbunden sind, wobei die Glieder der mittleren Reihe (12) derart ausgebildet sind, dass sie Anschlagmittel definieren, die dafür ausgelegt sind, die relative Verschiebung zwischen den aufeinander folgenden Armbandelementen zu begrenzen, wobei die relative Verschiebung eine Verformung des spiralförmigen Bandes (18) hervorruft.

8. Armband nach einem der Ansprüche 5 oder 6, **dadurch gekennzeichnet, dass** wenigstens eines der Glieder der mittleren Reihe (12) derart ausgebildet ist, dass es Anschlagmittel definiert, die dafür ausgelegt sind, eine relative Verschiebung der benachbarten Glieder der ersten und der zweiten seitlichen Reihe (14a, 14b) in Bezug auf das Glied der mittleren Reihe (12) zu begrenzen, wobei die relative Verschiebung eine Verformung des spiralförmigen Bandes (18) hervorruft.

9. Armband nach einem der Ansprüche 5 bis 8, welches zwei Streifen umfasst, wobei jeder Streifen an einem Ende Mittel zur Befestigung an einem Uhrengehäuse und an einem anderen Ende Mittel zur Befestigung an einem Verschluss umfasst.

10. Armband nach einem der Ansprüche 5 bis 8, welches einen einzigen Streifen umfasst, wobei der Streifen an seinen Enden Mittel zur Befestigung an einem Uhrengehäuse umfasst und bei dem wenigstens eines seiner Enden über eine ohne Werkzeug lösbare Befestigung an dem Uhrengehäuse verfügt.

11. Verfahren zur Herstellung eines Armbandelements nach einem der Ansprüche 1 bis 4 oder eines Armbands nach einem der Ansprüche 5 bis 10, **dadurch gekennzeichnet, dass** es einen Schritt der Herstellung des einstückigen Teils durch 3D-Druck oder durch ein Verfahren der additiven Fertigung umfasst.

12. Herstellungsverfahren nach Anspruch 11, **dadurch gekennzeichnet, dass** es die folgenden Schritte umfasst:
- Parametrierung / Bemessung des einstückigen Teils auf der Basis von Informationen, die mit den Abmessungen und/oder der Geometrie des Handgelenks eines Trägers zusammenhängen,
- Herstellung des einstückigen Teils durch SD-Druck oder durch das Verfahren der additiven Fertigung.

13. Verfahren zur Herstellung eines Armbands nach einem der Ansprüche 11 oder 12, welches die folgenden Schritte umfasst:
- Erhalten des einstückigen Teils durch den Schritt des 3D-Drucks oder der additiven Fertigung, wobei das einstückige Teil wenigstens zwei starre Abschnitte aufweist, die untereinander einerseits durch einen flexiblen Verbindungsabschnitt und andererseits durch ein starres Verbindungselement, das jede relative Verschiebung zwischen den starren Abschnitten verhindert, verbunden sind,
- Endbearbeitung der Oberfläche des einstückigen Teils,
- Entfernen des starren Verbindungselements, um wenigstens einen Freiheitsgrad zwischen den starren Abschnitten des Armbands zu erzeugen.

14. Herstellungsverfahren nach einem der Ansprüche 11 bis 13, wobei jedes Glied eine Hauptebene definiert, **dadurch gekennzeichnet, dass** wenigstens einige der aufeinander folgenden Glieder zwischen ihren jeweiligen Hauptebenen und auf der Seite, die dazu bestimmt ist, mit dem Arm des Trägers in Kontakt zu kommen, einen Winkel von weniger als 180° definieren.

## Claims

1. Linked bracelet element, comprising at least first and second links (10, 13a, 13b) connected to one another, each of which having a rigid base portion, said rigid base portions being connected to one another by means of at least one flexible connecting portion (18), **characterized in that** said rigid base portions and said flexible connecting portion together define an integral monolithic part.

2. Bracelet element according to Claim 1, **characterized in that** said flexible connecting portion is arranged so as to define a flexible articulation between said first and second links.

3. Bracelet element according to Claim 1 or 2, **characterized in that** it comprises at least one third link having a rigid base portion, this third link being connected to said first link by means of said flexible connecting portion and/or an additional flexible connecting portion, said rigid base portion of said third link and, if present, said additional flexible connecting portion also forming part of said integral monolithic part.

4. Bracelet element according to Claim 3, **characterized in that** said first, second and third links are arranged such that said second and third links are located on either side of said first link, being offset with respect thereto and facing one another.

5. Bracelet comprising a plurality of bracelet elements according to either of Claims 3 and 4, said first links of which form a central row (12), said second links forming a first lateral row (14a) and said third links forming a second lateral row (14b), **characterized in that** two facing links (13a, 13b), respectively located in the first and second lateral rows (14a, 14b), are connected by a bar (16) that defines an axis about which a link of the central row (12) is able to move, said link of the central row being connected elastically, by its flexible connecting portion, to said bar (16) and forming a monolithic assembly with said bar (16) and said two links of the lateral rows (14a, 14b).

6. Bracelet according to Claim 5, **characterized in that** said flexible portion comprises a spiral strip (18) wound about said bar (16).

7. Bracelet according to Claim 6, **characterized in that** the links of the central row (12) of at least two consecutive bracelet elements are connected to one another by a first link (13a) and a second link (13b) of each lateral row (14a, 14b) located facing one another, said links of the central row (12) being shaped so as to define abutment means that are arranged so as to limit the relative movement between said consecutive bracelet elements, said relative movement causing a deformation of the spiral strip (18) .

8. Bracelet according to either of Claims 5 and 6, **characterized in that** at least one of said links of the central row (12) is shaped so as to define abutment means that are arranged so as to limit a relative movement of the adjacent links of the first and second lateral rows (14a, 14b) with respect to said link of the central row (12), said relative movement causing a deformation of the spiral strip (18) .

9. Bracelet according to one of Claims 5 to 8, comprising two strands, each strand comprising at one end means for attaching to a watch case, and at another end means for attaching to a clasp.

10. Bracelet according to one of Claims 5 to 8, comprising a single strand, said strand comprising at its ends means for attaching to a watch case, at least one of its ends having a means for tool-less removable attachment to the watch case.

11. Method for producing a bracelet element according to one of Claims 1 to 4, or a bracelet according to one of Claims 5 to 10, **characterized in that** it comprises a step of producing the monolithic part by 3D printing or by means of an additive manufacturing process.

12. Production method according to Claim 11, **characterized in that** it comprises the following steps:
- parametrization/dimensioning the monolithic part, based on information connected to the dimensions and/or the geometry of the wrist of a wearer,
- producing the monolithic part by 3D printing or by means of the additive manufacturing process.

13. Method for producing a bracelet according to either of Claims 11 and 12, comprising the following steps:
- obtaining said monolithic part by said step of 3D printing or additive manufacturing, said monolithic part comprising at least two rigid portions connected to one another on the one hand by a flexible connecting portion and on the other hand by a rigid connecting element preventing any relative displacement between said rigid portions,
- finishing the surface of said monolithic part,
- removing the rigid connecting element so as to allow at least one degree of freedom between said rigid portions of said bracelet.

14. Production method according to one of Claims 11 to 13, in which each link defines a principal plane, **characterized in that** at least some of the consecutive links define, between their respective principal planes and on the side intended to be in contact with the arm of the wearer, an angle of less than 180°.
